(19) Europäisches Patentamt
European Patent Office
Office européen des brevets

(11) Publication number: **0 435 494 A2**

(12) **EUROPEAN PATENT APPLICATION**

(21) Application number: **90313295.9**

(51) Int. Cl.[5]: **C04B 35/56**, C04B 35/00

(22) Date of filing: **07.12.90**

(30) Priority: **28.12.89 US 458461**

(43) Date of publication of application: **03.07.91 Bulletin 91/27**

(84) Designated Contracting States: **BE DE ES FR GB IT NL**

(71) Applicant: **DOW CORNING CORPORATION**
**3901 S. Saginaw Road**
**Midland Michigan 48686-0994(US)**

(72) Inventor: **Burns, Gary Thomas**
**1300 N. Parkway**
**Midland, Michigan 48640(US)**
Inventor: **Keller, Ronald James**
**31958 Lynton Lane**
**Solon, Ohio 44139(US)**
Inventor: **Saha, Chandan Kumar**
**2345 Woodland Estates Drive**
**Midland, Michigan 48640(US)**
Inventor: **Hauth, Willard Ellsworth**
**482 Fillmore**
**East Aurora New York 14052(US)**

(74) Representative: **Laredo, Jack Joseph et al**
**Elkington and Fife Beacon House 113**
**Kingsway**
**London, WC2B 6PP(GB)**

(54) **Multicomponent binders for SiC powders.**

(57) The preparation of highly densified ceramic bodies by the sintering of certain organosilicon polymers, carbon sources, silicon carbide powders, metal-containing sintering aids and, optionally, curing agents is described. Such highly densified ceramic bodies can be prepared by either a pressureless sintering process or a hot press sintering process. The compositions of this invention can be formed into desired shapes and then sintered to form ceramic, shaped bodies with high densities. One advantage of the present invention is that the green bodies have relative high strengths and thus can be easily handled and, if desired, machined before sintered. A second advantage is that any organosilicon polymer can be utilized, regardless of char yield or free carbon value, since the carbon is derived from a carbon source which yields a carbon char upon pyrolysis.

EP 0 435 494 A2

## MULTICOMPONENT BINDERS FOR SIC POWDERS

This invention relates to the preparation of highly densified ceramic bodies by the pyrolysis of a multicomponent mixture comprising an organosilicon polymer which yields a silicon-carbon char upon pyrolysis, a carbon source which yields a carbon char upon pyrolysis, a silicon carbide powder, certain metal-containing sintering aids and, optionally, curing agents. Such highly densified ceramic bodies can be prepared by either a pressureless sintering process or a hot press sintering process.

This invention also relates to novel compositions of matter consisting essentially of silicon carbide powder, a metal-containing sintering aid, an organosilicon polymer which yields a silicon-carbon char upon pyrolysis, a carbon source which yields a carbon char upon pyrolysis and, optionally, curing agents. These compositions of matter can be formed into desired shapes and then sintered to form ceramic, shaped bodies with high densities. One advantage of the present invention is that the green bodies have high strengths and thus can be easily handled and, if desired, machined before sintering. A second advantage is that any organosilicon polymer, regardless of free carbon value, may be used herein. A final advantage is that this technology allows the use of one organosilicon polymer for multiple purposes, such as press and sinter or transfer/injection molding and sinter applications, by simply changing the amount of polymer in the mix.

Prockazka in U.S. Patents 4,004,934 and 4,041,117 and Prockazka et al. in U.S. Patent 4,081,284 describe high density silicon carbide ceramic bodies prepared in a pressureless sintering process. Such ceramic bodies were prepared from mixtures consisting of silicon carbide powder, a boron-containing additive and a carbonaceous additive. The carbonaceous additives or binders are high molecular weight, carbon-based aromatic compounds such as phenol-formaldehyde condensate-novolak, resorcinol-formaldehyde, aniline-formaldehyde, cresol-formaldehyde, derivatives of polynuclear aromatic hydrocarbon compounds contained in coal tar, polyphenylene, polymethylphenylene and the like. Ceramic silicon carbide materials with greater than 85% of theoretical density were obtained. The above patents, however, fail to disclose the utility of organosilicon polymers with the carbonaceous additives.

Onda et al. in Japanese Kokai Patent 60-16869 describe a method of preparing high density silicon carbide ceramics which involves pressureless sintering of a mixture consisting of silicon carbide powder, an auxiliary sintering aid and an organosilicon polymer characterized by a Si-C skeletal structure. Disclosed sintering aids include boron, aluminum and beryllium containing compounds. The organosilicon polymers were described as "high-molecular-weight organic silicon-containing compounds with silicon-carbon skeletal structures." The organosilicon polymers were not further identified even in the examples. Based on this limited description it appears likely that the organosilicon polymers were polycarbosilanes which have a Si-C skeletal backbone. Onda et al., however, fail to disclose the utility of a carbon source in combination with the polymer for forming the dense silicon carbide ceramic materials.

In copending applications, serial numbers 07/248,884, 07/249,036, 07/265,988 and 07/268,398 in the names of Atwell et al. or Burns et al. and assigned to the same assignee hereof, there are disclosed methods of producing silicon carbide sintered bodies by forming a mixture of various organosilicon polymers, metal-containing sintering aids, optional curing agents and silicon carbide powders into green bodies and then sintering them in an inert atmosphere at temperatures in excess of 1900 °C. The use of a carbon source in combination with the polymers, however, was not disclosed.

The present invention discloses for the first time that high density, high strength ceramic products may unexpectedly be obtained by sintering a mixture containing a combination of an organosilicon polymer and a carbon source. This combination is advantageous in that it will allow the inclusion of any organosilicon polymer, including those which were not operative in the above copending applications.

This invention relates to a method of preparing a sintered body of silicon carbide. The method comprises first preparing a uniform mixture of silicon carbide powder, a metal-containing sintering aid, an organosilicon polymer which yields a silicon-carbon char upon pyrolysis, a carbon source which yields a carbon char upon pyrolysis and, optionally, a curing agent. The metal-containing sintering aid is present at 0.1 to 3.0 weight percent of the metal based on the weight of silicon carbide powder. The organosilicon polymer is present at a level of 4 to 30 weight percent based on the weight of the silicon carbide powder. The curing agent, if present, is in an amount effective to cure the organosilicon polymer and, if applicable, the carbon source. The carbon source is present in an amount such that the total of the free carbon obtained from pyrolysis of the organosilicon polymer and the free carbon obtained from the pyrolysis of the carbon source is greater than 0.2 weight percent based on the total weight of the silicon carbide powder, the silicon-carbon char derived from the organosilicon polymer and the carbon char derived from the carbon source. Next, the uniform mixture is formed into the desired shape under pressure at a temperature less

than about 500 ° C. to obtain a shaped handleable green body. Finally, the shaped handleable green body is sintered in an inert atmosphere and/or under vacuum at a temperature greater than 1900 ° C. to obtain a sintered body of silicon carbide with a density greater than 2.4 g/cm$^3$.

This invention also relates to a method of forming a handleable green body. The method comprises first preparing a uniform mixture of silicon carbide powder, a metal-containing sintering aid, an organosilicon polymer which yields a silicon-carbon char upon pyrolysis, a carbon source which yields a carbon char upon pyrolysis and, optionally, a curing agent. The metal-containing sintering aid is present at 0.1 to 3.0 weight percent of the metal based on the weight of silicon carbide powder. The organosilicon polymer is present at a level of 4 to 30 weight percent based on the weight of the silicon carbide powder. The curing agent, if present, is in an amount effective to cure the organosilicon polymer and, if applicable, the carbon source. The carbon source is present in an amount such that the total of the free carbon obtained from pyrolysis of the organosilicon polymer and the free carbon obtained from the pyrolysis of the carbon source is greater than 0.2 weight percent based on the total weight of the silicon carbide powder, the silicon-carbon char derived from the organosilicon polymer and the carbon char derived from the carbon source. Next, the uniform mixture is formed into the desired shape under pressure at a temperature less than about 500 ° C.

This invention additionally relates to a uniform mixture comprising silicon carbide powder, a metal-containing sintering aid, an organosilicon polymer which yields a silicon-carbon char upon pyrolysis, a carbon source which yields a carbon char upon pyrolysis and, optionally, a curing agent. The metal-containing sintering aid is present at 0.1 to 3.0 weight percent of the metal based on the weight of silicon carbide powder. The organosilicon polymer is present at a level of 4 to 30 weight percent based on the weight of the silicon carbide powder. The curing agent, if present, is in an amount effective to cure the organosilicon polymer and, if applicable, the carbon source. The carbon source is present in an amount such that the total of the free carbon obtained from pyrolysis of the organosilicon polymer and the free carbon obtained from the pyrolysis of the carbon source is greater than 0.2 weight percent based on the total weight of the silicon carbide powder, the silicon-carbon char derived from the organosilicon polymer and the carbon char derived from the carbon source.

A particular advantage of this novel composition and process is that it allows the use of one organosilicon polymer in multiple forming techniques such as press and sinter ceramification, hot pressing or transfer/injection molding and sinter ceramification applications by simply varying the amount of polymer in the mix and adjusting the amount of carbon source to maintain the free carbon value desired. This feature of the invention avoids the costly and time consuming prior art process of controlling the polymers char stoichiometry by trial and error. An additional advantage in the present invention is the ability to incorporate organosilicon polymers with low carbon yield by adding the additional free carbon necessary to form the dense ceramic in the form of the carbon source. By incorporating such polymers, novel features can be introduced into the resultant ceramic bodies.

The present invention is concerned with the preparation of highly densified sintered bodies from organosilicon polymers which yield a silicon-carbon char upon pyrolysis, a carbon source which yields a carbon char upon pyrolysis, a metal-containing sintering aid, silicon carbide powder and, optionally, a curing agent. The sintered bodies produced from the practice of this invention have densities greater than about 2.4 g/cm$^3$ which corresponds to about 75% of the theoretical density of silicon carbide (3.21 g/cm$^3$). Such highly densified bodies are useful as light weight refractory ceramics.

The novel compositions of the invention can also be used to prepare handleable green bodies. By "handleable green bodies" we mean green bodies which have sufficient green strength to be handled or machined prior to sintering. The green strength may be additionally enhanced by curing the composition prior to sintering. The high green strength is one significant advantage of the present invention; the high green strength allows the green body to be further processed and shaped prior to the final sintering step. Generally, green strengths of 500 psi or more may be obtained in the practice of this invention.

The green bodies may be formed by conventional techniques known in the art. Such methods include pressure molding, uniaxial pressing, isopressing, extrusion, transfer molding, injection molding and the like. The formed green bodies may be further shaped by machining if desired. Once shaped, the green bodies are fired to an elevated temperature under an inert atmosphere and/or under a vacuum to convert the green bodies into ceramic articles having densities greater than about 75% of theoretical. It is preferred that the density of the ceramic article be greater than about 85% of theoretical (2.7 g/cm$^3$). It is more preferred that the density be greater than about 2.9 g/cm$^3$ (90% of theoretical); it is most preferred that the density be greater than about 3.05 g/cm$^3$ (95% of theoretical).

Sintering may be carried out using either a pressureless sintering process or a hot press sintering process. When employing the compositions of this invention, either process will produce a highly densified ceramic article. The hot press sintering process will generally produce higher density ceramic articles.

Therefore, if the maximum density is desired, a hot press sintering process would be preferred. Generally, however, the pressureless sintering process is preferred because of the simplified operations involved.

Sintering is carried out under an inert atmosphere, under vacuum or both. In so doing, the sintering process is enhanced and the density of the sintered product increased. If an inert atmosphere is used it may be, for example, argon or nitrogen gas. If a vacuum is used it may be, for example, in the range of 0.1-0.3 torr. Additionally, a combination of the above processes may be used to provide the desired density. For example, the composition may be fired at a given temperauture for a given period of time and then vacuum applied for an additional pyrolysis period.

In addition to the above advantages of an inert atmosphere, the use of a nitrogen environment during sintering or pyrolysis can reduce the conversion of beta-SiC to alpha-SiC grains. The growth of large alpha SiC grains is seen as a particular disadvantage since they are often the site of a flaw in the ceramic product.

Sintering is generally carried out at a temperature of about 1900° C. or higher. Lower temperatures can be used but the ceramic product may not possess the desired density. The preferred sintering temperature is about 1950 to 2200° C. with about 2070° C. being most preferred.

The organosilicon polymers useful in this invention are generally well known in the art and, unlike the prior art, any organosilicon polymer that yields a silicon-carbon char can be utilized regardless of structure or free carbon value. However, organosilicon polymers which are capable of being converted to ceramic materials with a significant ceramic char yield are preferred because the amount of binder shrinkage that occurs upon pyrolysis decreases as the char yield increases. Lower binder shrinkage, furthermore, is directly correlated to density of the final product. Preferably, therefore, the ceramic char yield is greater than about 20 weight percent. Most preferably, organosilicon polymers with ceramic char yields greater than about 35 weight percent will be employed.

The preferred organosilicon polymers are also those which contain free carbon values too low to form high density binders without supplemental carbon sources, such as polymers which yield either a silicon rich or nearly stoichiometric char. These polymers, which were once considered to have little or no value as ceramic binders, can now be utilized to allow for a greater diversity of products than was previously known.

Useful organosilicon polymers include, for example, organopolysiloxanes, polysilazanes, polysilanes, polycarbosilanes and polymetallosiloxanes. If the organosilicon polymer is an organopolysiloxane, it may contain units of general structure $[R_3SiO_{0.5}]$, $[R_2SiO]$, $[RSiO_{1.5}]$ and $[SiO_2]$ where each R is independently selected from the group consisting of hydrogen, alkyl radicals containing 1 to 20 carbon atoms such as methyl, ethyl, propyl etc., aryl radicals such as phenyl and unsaturated alkyl radicals such as vinyl. Preferred organopolysiloxanes contain varying amounts of $[PhSiO_{1.5}]$, $[MeSiO_{1.5}]$, [MePhSiO], $[Ph_2SiO]$ and [PhViSiO] units. Especially preferred organopolysiloxanes are described by the unit formulas:

$[PhSiO_{1.5}][MeSiO_{1.5}][PhViSiO]$

or

$[MeSiO_{1.5}][MePhSiO][PhSiO_{1.5}][Ph_2SiO]$

wherein varying mole fractions of each unit are present. Organopolysiloxanes useful in this invention may contain other siloxane units in addition to, or in place of, the siloxane units just mentioned. Examples of such siloxane units include $[ViSiO_{1.5}]$, [MeHSiO], [MeViSiO], $[Me_2SiO]$, $[Me_3SiO_{0.5}]$ and the like. Mixtures of organopolysiloxanes may also be employed.

The organopolysiloxanes of this invention can be prepared by techniques well known in the art. The actual method used to prepare the organopolysiloxanes is not critical. Most commonly, the organopolysiloxanes are prepared by the hydrolysis of organochlorosilanes. Such methods, as well as others, are described in Noll, Chemistry and Technology of Silicones, chapter 5 (translated 2d Ger. Ed., Academic Press, 1968).

If the preceramic organosilicon polymer is a polysilazane, it may contain units of the type [RSiNH], $[RSi(NH)_{1.5}]$ and/or

$$[R'_2CR''_2CR'''_2CSiNH]$$

where each R is independently selected from the group consisting of hydrogen, alkyl radicals containing 1 to 20 carbon atoms such as methyl, ethyl, propyl etc., aryl radicals such as phenyl and unsaturated

hydrocarbon radicals such as vinyl and each R', R" and R'" is independently selected from the group consisting of hydrogen, alkyl radicals having 1 to 4 carbon atoms, aryl radicals such as phenyl and unsaturated hydrocarbon radicals such as vinyl. Generally, polysilazanes which contain [$Ph_2SiNH$], [PhSi-$(NH)_{1.5}$] and/or

$$[CH_2CH_2CH_2SiNH]$$

units are preferred. The polysilazanes useful in this invention may, however, contain other silazane units such as [$MeSi(NH)_{1.5}$], [$Me_2SiNH$], [$ViSi(NH)_{1.5}$], [$Vi_2SiNH$], [PhMeSiNH], [$HSi(NH)_{1.5}$], [PhViSiNH], [MeViSiNH] and the like.

The polysilazanes of this invention can be prepared by techniques well known in the art. The actual method used to prepare the polysilazane is not critical. Suitable preceramic silazane polymers or polysilazanes may be prepared by the methods of Gaul in U.S. Patents 4,312,970 (issued January 26, 1982), 4,340,619 (issued July 20, 1982), 4,395,460 (issued July 26, 1983) and 4,404,153 (issued September 13, 1983). Suitable polysilazanes also include those prepared by the methods of Haluska in U.S. Patent 4,482,689 (issued November 13, 1984) and Seyferth et al. in U.S. Patent 4,397,828 (issued August 9, 1983). Other polysilazanes suitable for use in this invention can be prepared by the methods of Cannady in U.S. Patents 4,540,803 (issued September 10, 1985) and 4,543,344 (issued September 24, 1985) and Burns et al. in J. Mater. Sci, 22 (1987), pp 2609-2614. Especially preferred polysilazanes are the polysilacyclobutasilazanes, polydisilacyclobutasilazanes and silane-modified polysilacyclobutasilazanes. For purposes of this specification, the term "silacyclobutasilazane polymer" is intended to include the polysilacyclobutasilazanes, polydisilacyclobutasilazanes and silane-modified polysilacyclobutasilazanes. Silacyclobutasilazane polymers are thermally or catalytically crosslinkable. Therefore, green bodies prepared from these silacyclobutasilazane polymers may be cured prior to the sintering step. Such cured green bodies generally possess higher green strengths than similar uncured green bodies.

The polysilacyclobutasilazanes of this invention can be prepared by (I) contacting and reacting in an inert, essentially anhydrous atmosphere, a 1,1-dichloro-1-silacyclobutane having the general formula

$$R_2CR'_2CR''_2CSiCl_2$$

with a different nucleophile selected from the group consisting of ammonia, hydrazine and diamines having the general formula $HR'''NQNR^{iv}H$ at a temperature less than about 50 °C. for a time sufficient to form polysilacyclobutasilazane and (II) recovering the polysilacyclobutasilazane from the reaction mass in (I), wherein each R, R', R", R'" and $R^{iv}$ is independently selected from hydrogen, alkyl radicals having 1 to 4 carbon atoms, aryl radicals and vinyl radicals and Q is a divalent hydrocarbon radical.

The polydisilacyclobutasilazanes can be prepared by (I) contacting and reacting in an inert, essentially anhydrous atmosphere, a chloro-1,3-disilacyclobutane having the formula

$$R'R''CX'ClSiR'''R^{iv}CSiX''Cl$$

where R', R", R'", and $R^{iv}$ are each independently selected from the group consisting of hydrogen, alkyl radicals containing 1 to 4 carbon atoms, aryl radicals and vinyl radicals and both X' and X" are selected from the group consisting of chlorine, bromine, fluorine, alkyl radicals containing 1 to 4 carbon atoms, aryl radicals and vinyl radicals, with a cyclic silazane or a mixture of cyclic silazanes selected from the groups consisting of silazanes having the general formula (i) $(CH_3RSiNH)_x$ and (ii) $(C_6H_5RSiNH)_x$ wherein each R is independently selected from the group consisting of hydrogen, alkyl radicals containing 1 to 4 carbon atoms, aryl radicals and vinyl radicals and x has a value of 3, 4, 5 or 6 at a temperature less than about 50 °C., for a time sufficient to form polydisilacyclobutasilazanes; (II) contacting the product from (I) with essentially anhydrous gaseous ammonia; and (III) recovering the polydisilacyclobutasilazane from the reaction mass in (II).

The preferred silane-modified polysilacyclobutasilazanes can be prepared by the method comprising (A) contacting and reacting in an inert, essentially anhydrous atmosphere, a polysilacyclobutasilazane or a

polydisilacyclobutasilazane with a compound or mixture of compounds selected from the group consisting of (i) chlorosilanes having the general formula $(R^{v})_{m}SiCl_{4}$-m and (ii) chlorodisilanes having the general formula $\{Si(R^{v})_{t}Cl_{4}-t\}_{2}$ where, in the general formulae for chlorosilanes and chlorodisilanes, each $R^{v}$ is independently selected from hydrogen, alkyl radicals having from 1 to 4 carbon atoms, aryl radicals and vinyl radicals; m is 0, 1 or 2; and t is 0 to 2; at a temperature less than about 50° C. for a time sufficient to form a partially modified polysilacyclobutasilazane; (B) contacting and reacting the partially modified polysilacyclobutasilazane with dry ammonia; and (C) recovering the silane-modified polysilacyclobutasilazane. The silane-modified polysilacyclobutasilazanes are the preferred silacyclobutasilazane polymers.

If the preceramic organosilicon polymer is a polysilane, it may contain units of general structure $[R_3Si]$, $[R_2Si]$ and [RSi] where each R is independently selected from the group consisting of hydrogen, alkyl radicals containing 1 to 20 carbon atoms such as methyl, ethyl, propyl etc., aryl radicals such as phenyl and unsaturated hydrocarbon radicals such as vinyl. Preferred polysilanes contain 5 to 25 mole percent $[Me_2Si]$ units and 75 to 95 mole percent [PhMeSi] units. Polysilanes useful in this invention may contain other silane units in addition to, or in place of, the silane units just mentioned. Examples of such silane units include [MeSi], [PhSi], [ViSi], [PhMeSi], [MeHSi], [MeViSi], $[Ph_2Si]$, $[Me_2Si]$, $[Me_3Si]$ and the like.

The polysilanes of this invention can be prepared by techniques well known in the art. The actual method used to prepare the polysilanes is not critical. Suitable polysilanes may be prepared by the reaction of organohalosilanes with alkali metals as described in Noll, Chemistry and Technology of Silicones, 347-49 (translated 2d Ger. Ed., Academic Press, 1968). More specifically, suitable polysilanes may be prepared by the sodium metal reduction of organo-substituted chlorosilanes as described by West in U.S. Patent 4,260,780 and West et al. in 25 Polym. Preprints 4 (1984). Other suitable polysilanes can be prepared by the general procedures described in Baney et al., U.S. Patent Application 4,298,559.

If the preceramic organosilicon polymer is a polycarbosilane, it may include any suitable polymer with a Si-C skeletal structure. Polycarbosilanes of this type are well known in the art. For instance, numerous examples and their method of manufacture are described in Noll, Chemistry and Technology of Silicones, chapter 7, (translated 2d Ger. Ed., Academic Press, 1968) and U.S. Patent 4,122,139 granted to Yajima et al.

If the preceramic organosilicon polymer is a polymetallosiloxane, it may include any suitable polymer containing repeating metal-O-Si units. Examples of suitable compounds include borosiloxanes and alumosiloxanes which are both well known in the art. For instance, Noll, Chemistry and Technology of Silicones, chapter 7, (translated 2d Ger. Ed., Academic Press, 1968) describes numerous polymers of this type as well as their method of manufacture. Additionally, Japanese Kokai Patent No. Sho 54[1979]-134744 granted to Tamamizu et al. and U.S. Patent 4,455,414 granted to Yajima et al. also describe the preparation and utility of various polymetallosiloxanes as binders.

The above organosilicon polymers which contain vinyl groups may be preferred since vinyl groups attached to silicon provide a mechanism whereby the organosilicon polymer can be cured prior to sintering. Furthermore, silacyclobutyl-containing units may also be preferred since they allow for curing without the need for added catalysts. Finally, mixtures of any of the above organosilicon compounds are also contemplated by this invention.

Specific methods for preparation of suitable organosilicon polymers are illustrated in the examples included in the present specification.

Generally, the organosilicon polymer is included in the mixture in an amount of 4 to 30 percent based on the weight of silicon carbide powder utilized. The preferred amount, however, is dependent on the mechanism of molding and the rheology of the polymer. For instance, if press and sinter techniques are used, about 4-15% of the polymer might be included; if transfer/injection techniques are utilized, approximately 10-30% of the polymer might be included; and if extrusion techniques are utilized, approximately 10-20% of the polymer might be included. In each of the above instances, however, the rheology of the mixture should be analyzed to determine if it is appropriate for the application.

The compositions of the invention also include silicon carbide powders. Many of these agents are commercially available and well known in the art. Both alpha-SiC and beta-SiC powders, as well as mixtures, can be used. Generally, SiC powders with an average particle size of less than ten microns are preferred; powders with an average particle size of less than one micron are more preferred.

Suitable metal-containing sintering aids include iron, $Fe_3C$, magnesium, $MgC_3$, lithium, $Li_2C_2$, beryllium, $Be_2C$, boron, boron-containing compounds, aluminum, aluminum-containing compounds and metal oxides such as thorium oxide, yttrium oxide, lanthanum oxide and cerium oxide. In addition, if the organosilicon polymer used in the mixture is a polymetallosiloxane, the metal contained in the siloxane will function as the sintering aid and additional metals need not be added. For instance, a borosiloxane may function as both

the organosilicon polymer and the sintering aid and thus avoid the separate addition of one of the above metal compounds. Many of these metal-containing sintering aids are described in Negita, "Effective Sintering Aids for Silicon Carbide Ceramics: Reactivities of Silicon Carbide with Various Additives," 69 J. Am. Ceram. Soc. C-308 (1986). Other metal-containing sintering aids suggested by Negita might also be effective in the practice of this invention. Generally, the sintering aid should be present at an amount equivalent to about 0.1 to 3.0 weight percent of the metal based on the weight of the silicon carbide powder. Preferred sintering aids are selected from the group consisting of boron, boron-containing compounds, aluminum and aluminum-containing compounds. Examples of boron-containing sintering aids include boron carbide, lithium borohydride, trivinylboron, triphenylboron, silicon hexaboride, $H_3BO_3$, $B_2O_3$ and the like. Examples of aluminum-containing sintering aids include aluminum oxide, aluminum nitride, aluminum diboride and the like. The most preferred sintering aids are boron and boron carbide. Mixtures of sintering aids may also be used.

The compositions of this invention may also contain curing agents which are used to cure the shaped articles prior to sintering. The green bodies produced thereby generally have higher strengths than the noncured articles and, thus, can better withstand any handling or machining processes prior to sintering. The curing agent provides this higher strength by crosslinking. Both the organosilicon polymer and the carbon source, if it is a resin, may be crosslinked by the above process.

Conventional curing agents which are useful in the present invention are well known in the art. Examples include organic peroxides such as dibenzoyl peroxide, bis-p-chlorobenzol peroxide, bis-2,4-dichlorobenzol peroxide, di-t-butyl peroxide, dicumyl peroxide t-butyl perbenzoate, 2,5-bis(t-butylperoxy)-2,3-dimethylhexane and t-butyl peracetate; and platinum-containing curing agents such as platinum metal, $H_2PtCl_6$ and $((C_4H_9)_3P)_2PtCl_2$. Other conventional curing agents known in the art may also be used. The curing agent is present in an effective amount, i.e. an amount sufficient to induce crosslinking in the organic polymer or the resinous carbon source. The expression "an amount effective to cure the organosilicon polymer or the carbon source" is meant to also encompass the situation in which enough curing agent is present to cross-link both the polymer and the carbon source. Therefore, the actual amount of the curing agent will depend on the activity of the actual agent used and the amount of polymer present. Normally, however, the peroxide curing agent will be present at about 0.1 to 5.0 weight percent based on the weight of the compound to be cured with the preferred curing agent level being about 2.0 weight percent. When platinum-containing curing agents can be used, the level of the curing agent will normally be such that platinum is present at about 1 to 1000 ppm based on the weight of the compound to be cured with the preferred level at about 50 to 150 ppm platinum.

The compositions of this invention also include a carbon source which yields a carbon char upon pyrolysis. The carbon sources useful in this invention are commercially available and well known in the art. They include (1) inorganic carbon sources, (2) compounds which thermally degrade to carbon and (3) any other agent which will deliver the carbon desired.

The inorganic carbon sources of the invention are characterized in that they are generally inexpensive and relatively abundant. Examples of such sources include carbon lampblack or graphite. However, despite the advantages of these compounds they suffer from the disadvantage that the product formed therefrom is generally less dense. This is probably a result of the physical characteristics of the composition formed when the carbon source is combined with the SiC powder. For instance, when an inorganic carbon source is mixed with silicon carbide a mere heterogenous mixture of particles results. On the other hand, when organic agents as described below are combined with silicon carbide, they apparently 'coat' the silicon carbide molecules and create a more uniform composition which results in higher ceramic density.

The preferred carbon sources, therefore, are organic materials which thermally degrade to carbon chars. Examples of these include (1) high molecular weight aromatic compounds such as phenolformaldehyde condensate-Novolak$^{tm}$, resorcinolformaldehyde, aniline-formaldehyde or cresolformaldehyde; (2) derivatives of polynuclear aromatic hydrocarbons contained in coal tar such as dibenzanthracene or chrysene; (3) polymers of aromatic hydrocarbons such as phenolic resin, polyphenylene or polymethylphenylene; and (4) numerous other miscellaneous carbon sources such as polyacrylonitrile or carbon pitch. Other compounds which will supply the free carbon necessary will also be operative so long as it is compatible with the organosilicon polymer, the silicon carbide powder, the sintering aid, the curing agent and the resulting sintered product.

The carbon source is present in the compositions of the present invention at such a level that the free carbon value of the composition is greater than 0.2 weight percent based on the total weight of the silicon carbide powder, the char derived from the organosilicon polymer and the char derived from the carbon source.

What is meant by "free carbon value of the mixture" in this invention is the amount of free or excess

carbon derived from the carbon source and the organosilicon polymer during pyrolysis as expressed by a weight percentage based on the total combined weight of the silicon carbide powder, the char derived from the organosilicon polymer and the char derived from the carbon source. The amount of free carbon derived from the organosilicon polymer and carbon source is determined by pyrolysis of the organosilicon polymer and carbon source, in the absence of any silicon carbide powder or sintering aid, to an elevated temperature under an inert atmosphere and/or under vacuum until a stable ceramic char is obtained. For purposes of this invention, a "stable ceramic char" is defined as the ceramic char produced at an elevated temperature which will not significantly decrease in weight upon further exposure at the elevated temperature. Normally, a stable ceramic char is produced upon pyrolysis at 1800° C. for about 30 minutes. Other elevated temperatures can be used to form the stable ceramic char but the length of exposure to elevated temperature will need to be increased for temperatures less than 1800° C.

Both the char yield and the elemental content of the stable ceramic char are then determined. Using a rule of mixtures, the amount of SiC and free carbon or free silicon of the stable ceramic char can be calculated. The amount of free carbon or free silicon normally is expressed as weight of free carbon or free silicon produced per gram of organosilicon polymer or carbon source. Knowing the amount of free carbon or free silicon produced by pyrolysis of the organosilicon polymer and carbon source, one can determine how much carbon source is required to obtain an organosilicon polymer/carbon source/silicon carbide mixture with the desired free carbon value. Naturally, if one is using the same or a very similar organosilicon polymer or carbon source to prepare a sintered body, it is not required that the amount of free carbon or free silicon produced per gram of organosilicon polymer or carbon source be determined every time.

This procedure can perhaps be best illustrated by example. Assume an organopolysiloxane (100 g) which gives, upon pyrolysis to 1800° C., 50 grams of char, corresponding to a yield of 50 weight percent, which contains 40 weight percent carbon and 60 weight percent silicon. Such a char contains 30 g (1.07 moles) silicon. Using a rule of mixtures, the char also contains 1.07 moles (12.8 g) of carbon in the form of SiC. Since the char contains 20 g carbon, the amount of free carbon in the char is 7.2 g (20 g minus 12.8 g). Thus each gram of the preceramic organopolysiloxane yields 0.072 g free carbon. Likewise, if 100 g of a carbon source is pyrolized to a char yield of 50 weight percent which contains 100 weight percent free carbon, each gram of the carbon source yields 0.5 g free carbon. For a desired free carbon value of 1.5 weight percent, one would determine the amount of free carbon obtained from the known amount of organosilicon polymer to be included in the mixture and supply the remainder of the free carbon necessary in the form of the carbon source. For instance, in a mixture of 10 g of the above organopolysiloxane and 100 g of silicon carbide, the amount of carbon source (*x*) can be calculated using the following equation:

$$0.015 = \frac{0.72 + 0.5\underline{x}}{5 + 100 + 0.5\underline{x}}$$

where the numerator is the amount of free carbon produced from the organopolysiloxane (0.72 g = 10 g X 0.072 g C produced/g organosilicon) and the carbon source (0.5*x* = *x* g carbon source X 0.5 g C produced/g carbon source) and the denominator is the total weight of silicon carbide powder (100 g), the char resulting from the organopolysiloxane (5 g = 10 g X 50% char yield) and the char resulting from the carbon source (0.5*x* = *x* g carbon source X 50% char yield). Solving the above equation for *x*, it is found that 1.736 g of the carbon source will give the desired 1.5% free carbon value of the mixture.

This seemingly complex process of determining the amount of carbon source to be added can be summarized in the following steps:

1) A known weight of the organosilicon polymer and carbon source are separately pyrolized to stable char;

2) Each char is weighed and the result expressed as a weight percent of the starting compound, i.e. the "char yield" of the carbon source and the polymer;

3) The resultant chars are separately analyzed for elemental content;

4) Using a rule of mixtures, the amount of "free carbon" in each char is calculated by subtracting the amount of carbon bound to silicon from the total carbon present. The resultant value is expressed as free carbon produced per gram of starting material; and

5) The amount of carbon source to be added to provide a desired free carbon value for the mixture is calculated using the following equation and solving for g of Carbon Source(CS):

$$\text{FC Value} = \frac{(FCP \times P) + (FCCS \times CS)}{(SiC) + (CYP \times P) + (CYCS \times CS)}$$

Where FCP = grams of Free Carbon produced per gram of the polymer;
P = grams of Polymer; FCCS = grams of Free carbon produced per gram of the Carbon Source; CS = grams of the Carbon Source; SiC = grams of Silicon Carbide powder; CYP = Char Yield of the Polymer (%); and CYCS = Char Yield of the C Source(%).

If a polymer with a silicon rich char were to be utilized, one would follow the procedure as above except that the "free silicon" would be calculated. Knowing this value, enough carbon source would be added to the mixture to both combine with the "free silicon" to form SiC and also supply the free carbon desired.

Thus, using the above procedure, the amount of carbon source required to prepare a composition of this invention can be determined. This procedure avoids the costly and time consuming trial and error method which might otherwise be required.

The free carbon value of the mixture must be greater than 0.2 weight percent based on the total weight of the silicon carbide powder, the char derived from the organosilicon polymer and the char derived from the carbon source. For free carbon values less than about 0.2 weight percent the density of the sintered body will generally fall below about 2.4 g/cm$^3$ (75% of theoretical). It is generally preferred that the free carbon value of the mixture is greater than 0.5% and that the density of the resulting sintered body be greater than about 85% of theoretical. It is more preferred that the free carbon value of the mixture be between 0.5 and 3.0 weight percent with a range of 1.0 to 2.0 weight percent being even more preferred. The maximum density is generally obtained when the free carbon value of the mixture is about 1.5 weight percent.

In addition to the above components, the addition of other processing aids such as lubricants, deflocculants and dispersants is within the scope of this invention. Examples of such compounds include stearic acid, mineral oil, paraffin, calcium stearate, aluminum stearate, succinic acid, succinimide, succinic anhydride or various commercial products such as Oloa 1200$^{tm}$. These processing aids have also been shown to be useful with other silicon carbide compositions as disclosed herein in which only the organosilicon polymer or the carbon source are included.

Once the amount of carbon source required in the mixture has been determined, the various components are combined in a manner that assures a uniform and intimate mixture. Such a mixture is required to avoid areas of varying density throughout the sintered product. Uniform and intimate mixtures can be prepared by using conventional blending techniques. Examples of such techniques include grinding the various powders in either the dry or wet state and ultrasonic dispersion. Generally preferred is wet grinding where the various powder are mixed and ground with organic solvents and the solvent removed. Other mixing and grinding methods will be apparent to those skilled in the art.

The uniform and intimate mixture may then be formed into the desired shape. Preferably, the desired shape is formed under pressure using such methods as injection molding, uniaxial pressing, isopressing, extrusion, transfer molding and the like.

The composition is preferably cured prior to its final shaping. Curing procedures are well known in the art. Generally, such curing can be carried out by heating the article to about 50 to 350°C.

Once the final shape has been obtained, the article is sintered in an inert atmosphere and/or under vacuum to a temperature of 1900°C. or more. The preferred sintering temperature is about 1950 to 2200°C. with about 2070°C. being most preferred.

Although not wishing to be limited by theory, it is thought that the free carbon derived from the organosilicon polymer and carbon source plays two different roles in the formation of highly densified sintered bodies. First, it helps remove oxygen present in the silicon carbide powder; and secondly, it apparently acts as an additional sintering aid. Silicon carbide powders often contain so called "free carbon." However, the "free carbon" present in the silicon carbide powder does not appear to be as active or effective as free carbon generated in situ from organosilicon polymer and carbon source. It is not clear whether the free carbon produced in situ is more active chemically or whether it is simply more evenly dispersed. In any event, when the free carbon value of the mixture (as defined earlier) is about 1.5 weight percent, sintered bodies with maximum densities are obtained.

So that those skilled in the art can better appreciate and understand the invention, the following examples are given. Unless otherwise indicated, all percentages are by weight. Throughout this specification "Me" represents a methyl group, "Ph" represents a phenyl group and "Vi" represents a vinyl group.

In the following examples, the analytical methods used were as follows:

Proton NMR spectra were recorded on either a Varian EM360 or EM390 spectrometer and the results presented herein in ppm; fourier transform IR spectra were recorded on a Nicolet 5 DX spectrometer. Gel permeation chromatography (GPC) data were obtained on a Waters GPC equipped with a model 600E systems controller, a model 490 UV and model 410 Differential Defractometer detectors; all values are relative to polystyrene.

Carbon analysis was done on a Control Equipment Corporation 240-XA Elemental Analyzer. Oxygen analysis was done on a Leco Oxygen Analyzer equipped with an Oxygen Determinator 316 (Model 783700) and an Electrode Furnace EF100. Silicon was determined by a fusion technique which consisted of converting the silicon material to soluble forms of silicon and analyzing the solute for total silicon by atomic absorption spectrometry.

Compounding was done on a Brabender Plasticorder (Model PL- V151) equipped with roller blades. Test bars were formed on a Carver laboratory press (Fred S. Carver Inc., Summit, N.J.). Pyrolysis was carried out in an Astro graphite element tube furnace Model 1000-3060-FP12 equipped with an Eurotherm Controller/Programmer Model 822. Flex strengths (using the four-point bend technique) were determined on either a Model TTC or Model 8562 Instron instrument.

The SiC powder used was IBIDEN BETARUNDUM UF$^{tm}$ silicon carbide which is a mixture of about 5 to 8% alpha-SiC and 92 to 95% beta-SiC. The boron used was amorphous boron powder from Cerac Inc. The Phenolic resin was obtained from Union Carbide.

Example 1 Sintered Bodies from $(MeSiO_{1.5})_{.45}(MePhSiO)_{0.5}(PhSiO_{1.5})_{.40}(Ph_2SiO)_{.10}$

A. Polymer Synthesis.

To a three-necked, 5 L flask equipped with a drainage stopcock, thermometer, condenser and addition funnel was added 895 g of water and 162 g of isopropyl alcohol. A mixture of 67.20 g (0.45 mole) of $MeSiCl_3$, 9.55 g (0.05 mole) of $PhMeSiCl_2$, 84.5 g (0.40 mole) of $PhSiCl_3$ and 25.29 g (0.10 mole) of $Ph_2SiCl_2$ in 390 g toluene was added below the water surface over a six minute period. After stirring for 30 minutes, the water was drained. The polymer layer was washed with two 1 L portions of water. The polymer layer was dried and concentrated in vacuo to give a brittle polymer.

B. Char Composition Calculations.

An aliquot of the polymer produced in A above was heated to 1800 °C. in an argon atmosphere using a temperature program of room temperature to 1800 °C. at 10 °C./minute with a two hour hold at temperature. The sample had a char yield of 35.9%. The carbon content of the char was 36.8% (63.2% silicon by difference). The following calculation was made: 100 g of polymer gives 35.9 g of a ceramic char containing 36.8% carbon and 63.2% silicon (by difference). The char consists of 31.39 g of SiC (87.4%) and 4.51 g of excess carbon (12.6%). Therefore, every gram of polymer gives 0.314 g of SiC and 0.045 g of excess carbon. Phenolic resin gives a 50% char yield consisting of 100% carbon. Therefore, every gram of resin gives 0.50 g of excess carbon.

C. Test Bar Fabrication.

The following series of mixes and test bars were prepared:

1) 43.25 g of SiC powder was ultrasonically dispersed in a solution of 1.779 g of Phenolic resin in 400 mL of acetone. The solvent was removed via rotary evaporation and the residue further dried at full vacuum for 30 minutes. The dried residue was ground in a hardened alumina mortar and pestle and then added to a suspension of 0.303 g of amorphous boron in a solution of 5.011 g of the siloxane polymer formed in A above and 0.076 g of LUPERSOL$^{tm}$ 101 (bis(t-butyl peroxy-2,5-dimethylhexane)) in 400 mL of toluene. The slurry was ultrasonically mixed for 5 minutes. The solvent was removed via rotary evaporation, the residue dried at 1 torr for one hour and the dried residue ground and sieved through a 212 micron screen. The sieved powder was pressed into billets at 47 ksi (green density = 2.13 g/cm$^3$, 4 pt MOR = 561±30 psi). Aliquots of the test billets were cured at 200 °C. for 15 hours in an air atmosphere (cured density = 2.08 g/cm$^3$, cured 4 pt MOR = 3370±115 psi).

2) (Comparison without carbon source) 21.63 g of SiC powder and 0.15 g of amorphous boron were ultrasonically dispersed in a solution of 2.51 g of the polymer formed in A above and 0.049 g of

LUPERSOL[tm] 101 in 400 mL of toluene. The solvent was removed via rotary evaporation. The residue was further dried at 1 torr for one hour and then ground in a mortar and pestle and sieved through a 90 micron screen. The sieved powder was uniaxially pressed into billets at 47 ksi (green density = 2.11 g/cm³, 4-pt MOR = 915 psi). Aliquots of the test bars were cured at 200 °C. for 2.5 hours in an air atmosphere (cured density = 2.07 g/cm³, cured 4-pt MOR = 2171 psi)

3) (Comparison without polymer) 93.5 g of SiC powder and 0.5 g of amorphous boron was ultrasonically dispersed in a solution of 6.00 g of Phenolic resin in 500 mL of acetone for 5 minutes. The solvent was removed at reduced pressure and the residue dried at full vacuum. The dried powder was ground in a hardened alumina mortar and pestle and then sieved through a 250 micron screen. The sieved powder was uniaxially pressed into test bars at 47 ksi. (Green density 2.02 g/cm³ and the average 4-pt MOR was 258 ± 45 psi)

4) 21.63 g of SiC, 0.152 g of amorphous boron and 0.448 g of carbon lampblack were ultrasonically dispersed into a solution of 2.51 g of the siloxane polymer formed in A above and 0.047 g of LUPERSOL[tm] 101 in ca. 400 mL of toluene. The solvent was removed in vacuo and the residue ground and sieved through a 90 micron screen. The sieved powder was uniaxially pressed into billets at 47 ksi (green 4-pt MOR = 670 psi). Aliquots of the test bars were cured at 200 °C. for 2.5 hours in an air atmosphere (cured 4-pt MOR = 1978 psi).

Cured test bars from each of the above mixes were fired to 2100 °C. (15 °C./minute from room temperature to 2100 °C. with 30 minute holds at 1400 °C. and 2100 °C., argon atmosphere). The following results were obtained:

| Mix | Free Carbon Value | Fired Density (g/cm3) | Fired 4-Pt MOR (ksi) |
|---|---|---|---|
| 1 | 2.4% | 3.12 | 49.9 ± 2.4 |
| 2 | 0.5% | 2.63 | - |
| 3 | 3.1% | 3.13 | - |
| 4 | 2.4% | 2.86 | - |

The above data demonstrates that a combination of a phenolic resin and a low carbon siloxane can be used to 1) improve the cured strength/density of the piece prior to pyrolysis while 2) maintaining the fired density.

Example II Use of Phenolic with $(PhSiO_{1.5})_{0.33}(ViSiO_{1.5})_{0.33}(Me_2SiViO_{0.5})_{0.33}$ and $(Me_2HSiO)_4Si$

A. Polymer Synthesis

A mixture of 2476 g (12.5 mole) of $PhSi(OMe)_3$, 1850 g (12.5 mole) of $ViSi(OMe)_3$ and 1162.5 g (12.5 mole) of $(Me_2SiVi)_2O$ was added to a solution of 3.0 g of $CF_3SO_3H$ in 1.35 kg of distilled water in four portions over a period of 20 minutes. The internal temperature of the reaction increased to 60 °C. after the last addition. After the temperature had equilibrated, the solution was refluxed for 4 hours and then neutralized with 3.0 g of $K_2CO_3$. The volatile (MeOH) was removed by distillation until the internal pot temperature reached 120 °C. At this point, the solution was cooled and 136.3 g of a 3 weight percent solution of KOH in water and 1500 g of toluene was added. The reaction was refluxed for several hours and the water removed in a Dean-Stark trap. When all of the water was removed, the reaction was cooled to room temperature and 20 mL of $Me_2ViSiCl$ added. After stirring for several hours, the solution was filtered through a 0.2 micron membrane. Concentration of the filtrate gave 3449.9 g (91.7% yield) of a clear fluid. 1H NMR (CDCl3) 0.28 - 0.32 (overlapping singlets, SiMe), 5.45 - 6.08 (broad singlet, Si-Vi), 6.75-7.85 (broad m, Si-Ph). Mole ratio of $SiPh/SiVi/SiMe_2$ = 1.1/2.2/1.0. GPC (1% in THF, Refractive Index Detector): Mn = 948, Mw = 1790, Mz = 3411.

B. Char Composition Analysis

A blend of 5.00 g of the siloxane polymer formed in A above, 2.42 g of $(Me_2HSiO)_4Si$ and 0.14 g of a platinum catalyst was prepared by dissolving 0.182 g (2.98 mmole) of $HOCH_2CH_2NH_2$ and 1.00 g (1.49 mmole) of $(Bu_3P)_2PtCl_2$ in 100 g of toluene. The blend was cured at 200 °C. for 2 hours. An aliquot of the crosslinked polymer was heated to 1900 °C. in an argon atmosphere. (room temperature to 1900 °C. at

15° C./minute with a 2 hour hold at 1900° C.). A ceramic residue was obtained in 43.4% yield. The residue contained 30.9% carbon and 69.1% silicon (by difference). The following calculations were made: 100 g of polymer gives 43.4 g of a ceramic char containing 42.84 g of SiC and 0.56 g of excess carbon. Therefore, every gram of polymer gives 0.428 g of SiC and 0.006 g of excess carbon.

C. Test Bar Fabrication

1) 22.509 g of SiC powder and 0.15 g of amorphous boron was ultrasonically dispersed in a THF solution of 1.68 g of $(PhSiO_{1.5})_{0.33}(ViSiO_{1.5})_{0.33}(Me_2SiViO_{0.5})_{0.33}$, 0.821 g of $(Me_2HSiO)_4Si$ and 1.010 g of Phenolic resin for five minutes (free carbon value of the mixture = 2.16%). The solvent was removed at reduced pressure. The residue was ground in a hardened alumina mortar and pestle and sieved through a 125 micron screen. The sieved powder was pressed into test bars at 47 ksi. After curing at 200° C. for 2 hours (room temperature to 200° C. at 3° C./minute) in an argon atmosphere, the test bars had a density of 2.13 g/cm$^3$ and an average 4-pt MOR of 3832 ± 587 psi. Aliquots of the cured test bars were fired to 2100° C. (room temperature to 2100° C. at 15° C./minute with 30 minute holds at 1400° C. and 2100° C). The density of the fired test bars averaged 3.15 g/cm$^3$ (n = 4). The average 4-Pt MOR of machined (according to Mil Std [1942] MR) test bars was 43.4 ± 5.9 ksi.

2) (Comparison without carbon source) 22.507 g of SiC powder and 0.15 g of amorphous boron was ultrasonically dispersed in a solution of 1.68 g of $(PhSiO_{1.5})_{0.33}$ $(ViSiO_{1.5})_{0.33}(Me_2SiViO_{0.5})_{0.33}$ and 0.817 g of $(Me_2HSiO)_4Si$ in hexane for 5 minutes (free carbon value of mixture = 0.06%). The solvent was removed at reduced pressure and the residue ground and sieved through a 125 micron screen. The sieved powder was uniaxially pressed into test bars at 47 ksi. The test bars were cured at 200° C. for 2 hours (room temperature to 200° C. at 3° C./minute) in an argon atmosphere. The cured test bars had a density of 2.10 g/cm$^3$ and an average 4 - pt MOR of 1464 ± 124 psi. Aliquots of the cured test bars were fired to 2100° C. (room temperature to 2100° C. at 15° C./minute with 30 minute holds at 1400° C. and 2100° C.). The density of the fired test bars averaged 2.50 ± 0.03 g/cm$^3$ (n = 4).

The above examples show that a combination of improved cured strength and fired density can be obtained when low carbon containing siloxanes are used in conjunction with a high carbon source.

Example III Use of Phenolic Resin with Methyl Polysilane
$\overline{(MPS)}$-Ph-$\overline{N}H_2$ (2.0 / 0.08)

A. Polymer Synthesis

A solution of 2630.6 g (12.1 eq. of Si-Si) of methylchlorodisilanes (MCDS), 102.3 g (0.484 eq.) of phenyltrichlorosilane and 30 g of $Bu_4PCl$ was heated at 2° C./minute to 250° C. under a slight purge of argon. The volatiles were collected by distillation. The reaction was held at 250° C. for 55 minutes and then cooled to room temperature. The residue was dissolved in 1.5 L of dry, degassed toluene. After cooling to -78° C., $NH_3$ was rapidly bubbled through the solution for 2 hours. The slurry was warmed to room temperature and the excess ammonia distilled off. Filtration of the reaction and concentration of the filtrate gave 334.8 g of a bright yellow solid (12.1% yield based on the total weight of reactants). IR (film on KBr), cm-1 (intensity): 3466 (w), 3381 (w), 3065 (w), 2953 (m), 2889 (m), 2791 (w), 2081 (w), 1547 (w), 1406 (w), 1250 (m), 1040 (s), 893 (m), 766 (s), 681 (s). 1H NMR (CDCl3): 0.40 (broad singlet, Si-Me), 6.9 - 7.7 (broad m, Si-Ph). SiMe/SiPh integration ratio = 11.7/1.0.

B. Char Composition Analysis

An aliquot of the polymer formed in A above was heated to 1900° C. at 15° C./minute with a two hour hold at 1900° C. in an argon atmosphere. The polymer gave a ceramic char in 60.5% yield. The ceramic char had a elemental composition of 68.3% silicon and 29.6% carbon. The following calculation was made: 100 g of polymer gives 60.5 g of a ceramic char containing 29.6% carbon and 70.4% silicon (by difference) or 59.70 g of SiC and 0.8 g of excess silicon. Therefore, 1 g of polymer gives 0.597 g of SiC and 0.008 g of excess silicon.

C. Test Bar Fabrication and Sintering

97 g of Superior Graphite 100 GL SiC (beta) powder was dispersed in a solution of 6.0 g of Phenolic Resin in acetone. The solvent was removed under reduced pressure and the residue ground in a hardened alumina mortar and pestle and sieved through a 125 micron sieve. The sieved powders were fired to

1350° C. in argon to convert the phenolic resin to carbon. This powder and 0.5 g of amorphous boron was ultrasonically dispersed in a solution of 4.0 g of the MPS-Ph-$NH_2$ and 0.75 g of OLOA 1200[tm] (a commercial non-ionic surfactant) (free carbon value of the mixture = 2.9%). The solvent was removed at reduced pressure and the residue ground and sieved through a 125 micron screen. The sieved powders were pressed into small pellets (green density = 1.82 g/$cm^3$). The pellets were fired to 2095° C. in an argon atmosphere (room temperature to 2095° C. at 10° C./minute with a one hour hold at temperature). The fired pellets had a density of 2.92 g/$cm^3$ (90.9% of theoretical). Another sample was fired to 2025° C. (same conditions as above) in argon. The fired density of the pellets were 2.79 g/$cm^3$ (86.9% of theoretical).

This example shows that a polymer with a silicon rich char can form a high fired density ceramic when combined with a carbon source.

Example IV Use of Phenolic Resin with Hydridopolysilazane (HPZ)

A. Polymer Synthesis

The HPZ Polymer was prepared by the method of Legrow et al., "Ceramics from Hydridopolysilazane", Ceramic Bulletin 66 (2), pp 363-367 (1987).

B. Char Composition Analysis

The char yield (1200° C., Nitrogen atmosphere, 77%) and elemental composition (silicon = 59%, carbon = 11%, nitrogen = 27%) of the polymer formed in A above was taken from the above article by Legrow et al. Using this data, it was calculated that after loss of nitrogen the char would contain 47.5% excess silicon and 52.5% silicon carbide.

C. Test Bar Fabrication

1) (Comparison without carbon source) 35.0 g of SiC powder and 0.20 g of amorphous boron was ultrasonically dispersed in a solution of 1.95 g of HPZ in a toluene solution for 5 minutes. The solvent was removed at reduced pressure and the residue ground and sieved through a 90 micron screen. The sieved powder was uniaxially pressed into test bars at 47 ksi. The test bars had a density of 2.03 g/$cm^3$ and an average 4 - pt MOR of 310 ± 82 psi. Aliquots of the test bars were fired to 2070° C. using the following program: room temperature to 1150° C. at 2° C./min in an argon atmosphere; 1150 - 1575° C. at 5° C./min in a vacuum; a three hour hold at 1575° C. in a vacuum; 1575 - 2070° C. at 5° C./min. in an argon atmosphere; one hour hold at 2070° C. in an argon atmosphere; 2070 - 1100° C. at 3° C./min. in an argon atmosphere. The density of the fired test bars averaged 2.45 ± 0.04 g/$cm^3$ (n = 6) and the average 4-pt MOR of the unmachined test bars was 19.1 ± 2.4 ksi.

2) 35.0 g of SiC powder and 0.20 g of amorphous boron was ultrasonically dispersed in a solution of 1.96 g of HPZ and 2.00 g of Phenolic resin in THF for 5 minutes (free carbon value of mixture = 0.9%). The solvent was removed at reduced pressure and the residue ground and sieved through a 90 micron screen. The sieved powder was uniaxially pressed into test bars at 47 ksi. The test bars had a density of 2.06 g/$cm^3$ and an average 4-pt MOR of 821 ± 79 psi. Aliquots of the test bars were fired to 2070° –C. using the following temperature program: room temperature to 1150° C. at 2° C./min in an argon atmosphere; 1150 - 1575° C. at 5° C./min in a vacuum; a three hour hold at 1575° C. in a vacuum; 1575 - 2070° C. at 5° C./min. in an argon atmosphere; one hour hold at 2070° C. in an argon atmosphere; 2070 - 1100° C. at 3° C./min. in an argon atmosphere. The density of the fired test bars averaged 2.88 ± 0.02 g/$cm^3$ (n = 10) and the average 4-pt MOR of the unmachined test bars was 31.9 ± 5.1 ksi.

The above examples show that binders incorporating HPZ polymers provide superior fired density and strength when combined with a carbon source.

Example V Use of Phenolic Resin with a Polyborosiloxane

A. Polymer Synthesis

A mixture of 48.8 g (0.20 mole) of $Ph_2Si(OMe)_2$, 39.6 g (0.20 mole) of $PhSi(OMe)_3$, 41.5 g (0.40 mole) of $B(OMe)_3$, 23.25 g (0.10 mole) of $(Me_2SiVi)_{20,}$ 46.8 g of distilled water and 200 microliters of $CF_3SO_3H$ was refluxed for 3 hours and then the volatiles removed by distillation until the distillate temperature was 91° C. The reaction was cooled and 223 g of toluene was added. The reaction flask was fitted with a Dean-Stark trap and the reaction refluxed until all of the water was removed. After cooling, 2.15 g of $NaHCO_3$ and

2.0 mL of $Me_2SiViCl$ was added. The reaction was stirred for one hour and then filtered through a 0.22 micron membrane filter. Concentration of the filtrate gave 78.6 g (79.3%) of a translucent, light brown polymer. TMA softening point was 24.6° C. IR (thin film,KBr plate): 3219 (w), 3073 (w), 3053 (w), 3029 (w), 2965 (w), 2360 (w), 2341 (w), 1822 (w), 1594 (w), 1430 (s), 1379 (s), 1262 (m), 1135 (s), 1082 (s), 998 (w), 883(m), 845 (m), 804 (m), 719 (m), 698 (m), 678 (m), 515 (m) cm-1.

B. Char Composition Analysis

1) A blend of 3.73 g of the polymer formed in A above, 0.678 g of $Ph_2Si(OSiMe_2H)_2$ and 0.41 g of LUPERSOL 101$^{tm}$ was prepared. The blend was cross linked by heating the sample to 250° C. (room temperature to 250° C. at 4° C./min) for two hours in an argon atmosphere. An aliquot of the cured blend was heated to 1900° C. (room temperature to 1900° C. at 15° C./min.) and held at 1900° C. for two hours in an argon atmosphere. A ceramic char was obtained in a 32.5% yield. The ceramic char had an elemental composition of 39.6% carbon, 53.4% silicon (by difference) and 7.0% boron. The following rule of mixture calculations were made: 100 g of polymer gives 32.5 g of a ceramic char consisting of 24.8 g of SiC (76.3%) 4.77 g of excess carbon (14.7%) and 2.92 g of $B_4C$ (9.0%). Therefore, every gram of polymer gives .248 g of SiC and 0.048 g of excess carbon.

2) A blend of 2.84 g of the borosiloxane polymer and 0.166 g of LUPERSOL 101$^{tm}$ was prepared. The blend was crosslinked by heating the sample to 250° C. (room temperature to 250° C. at 4° C./min) for two hours in an argon atmosphere. An aliquot of the cured blend was heated to 1900° C. (room temperature to 1900° C. at 15° C./min.) and held at 1900°C. for two hours in an argon atmosphere. A ceramic char was obtained in a 33.2% yield. The ceramic char had an elemental composition of 36.0% carbon, 55.9% silicon (by difference) and 8.1% boron. The following rule of mixture calculations were made: 100 g of polymer gives 33.2 g of a ceramic char consisting of 26.6 g of SiC (80.2%) 3.4 g of excess carbon (10.2%) and 3.2 g of $B_4C$ (9.6%). Therefore, every gram of polymer gives 0.266 g of SiC and 0.034 g of excess carbon.

C. Test Bar Fabrication

1) (Comparison without carbon source) 35.0 g of SiC powder was ultrasonically dispersed in a toluene solution of 3.70 g of the borosiloxane polymer and 0.66 g of $(Me_2HSiO)_4Si$ for five minutes (free carbon value of mixture = 0.6%). The solvent was removed at reduced pressure. The residue was ground in a hardened alumina mortar and pestle and sieved through a 90 micron screen. The sieved powder was pressed into test bars at 47 ksi. After curing at 250° C. for 2 hours (room temperature to 250° C. at 4° C./minute) in an argon atmosphere, the test bars had a density of 2.11 g/cm$^3$ and an average 4-pt MOR of 3034 ± 263 psi. Aliquots of the cured test bars were fired to 2070° C. (room temperature to 300° C. at 2° C./min in an argon atmosphere; 300 - 1150° C. at 5° C./min in an argon atmosphere; 1150 - 1575° C. at 5° C./min in a vacuum; a three hour hold at 1575° C. in a vacuum; 1575 - 2070° C. at 5° C./min. in an argon atmosphere; one hour hold at 2070° C. in an argon atmosphere; 2070 - 1100° C. at 3° C./min. in an argon atmosphere). The density of the fired test bars averaged 2.10 g/cm$^3$ (n=10).

2) 42.0 g of SiC powder was ultrasonically dispersed in a THF solution of 5.50 g of the borosiloxane polymer and 2.50 g of Phenolic resin for five minutes (free carbon value of the mixture = 3.2%). The solvent was removed at reduced pressure. The residue was ground in a hardened alumina mortar and pestle and sieved through a 90 micron screen. The sieved powder was pressed into test bars at 47 ksi. After curing at 250° C. for 2 hours (room temperature to 250° C. at 4° C./minute) in an argon atmosphere, the test bars had a density of 2.09 g/cm$^3$ and an average 4-pt MOR of 2910 ± 561 psi. Aliquots of the cured test bars were fired to 2070° C. (room temperature to 300° C. at 2° C./min in an argon atmosphere; 300 - 1150° C. at 5° C./min in an argon atmosphere; 1150 - 1575° C. at 5° C./min in a vacuum; a three hour hold at 1575° C. in a vacuum; 1575 - 2070° C. at 5° C./min. in an argon atmosphere; one hour hold at 2070° C. in an argon atmosphere; 2070 - 1100° C. at 3° C./min. in an argon atmosphere). The density of the fired test bars averaged 3.03 g/cm$^3$ (n=9).

The above examples show that binders incorporating borosiloxane polymers provide superior fired density when combined with a carbon source.

Example VI Multicomponent Binders for Injection / Transfer Molding Applications Using $(MeSiO_{1.5})_{.45}(MePhSiO)_{.05}(PhSiO_{1.5})_{.40}(Ph_2SiO)_{.10}$

A. Polymer Synthesis

The polymer was synthesized and analyzed in the same manner as Example 1.

B. Test Bar Fabrication

The following materials were compounded together with a Brabender Plasticorder at 110 °C: 4.0 g of Phenolic resin, 24 drops of LUPERSOL 101$^{tm}$ 21 g of the siloxane polymer formed in Example 1-A, 0.34 g of amorphous boron, 0.40 g of calcium stearate and 67.95 g of SiC powder (free carbon value of mixture = 3.8%). The compounded mix gave 15 inches of flow in a spiral flow at 200 °C. Test bars were prepared by transfer molding 30 g shots into a 12 cavity test bar mold heated to 200 °C. After cooling, the test bars were removed from the mold and further cured at 250 °C. (room temperature to 250 °C. at 4 °C./min.) for 2 hours in an argon atmosphere. The cured test bars had an average cured density of 2.15 g/cm$^3$ and a average 4-Pt MOR of 2510 ± 591 psi (n = 5). The cured test bars were fired to 2070 °C. (room temperature to 300 °C. at 2 °C./min in an argon atmosphere; 300 - 1150 °C. at 5 °C./min in an argon atmosphere; 1150 - 1575 °C. at 5 °C./min in a vacuum; a three hour hold at 1575 °C. in a vacuum; 1575 - 2070 °C. at 5 °C./min. in an argon atmosphere; one hour hold at 2070 °C. in an argon atmosphere; 2070 - 1100 °C. at 3 °C./min. in an argon atmosphere). The density of the fired test bars averaged 3.09 g/cm$^3$ (n = 9).

The above example demonstrates that multicomponent binders can be used in transfer/injection molding applications.

**Claims**

**1.** A method of preparing a sintered body of silicon carbide, said method comprising
(A) forming a handleable green body by
(i) preparing a uniform mixture comprising silicon carbide powder, a metal-containing sintering aid, an organosilicon polymer which yields a silicon-carbon char upon pyrolysis and a carbon source which yields a carbon char upon pyrolysis, where the metal-containing sintering aid is present at 0.1 to 3.0 weight percent of the metal based on the weight of silicon carbide powder, where the organosilicon polymer is present at a level of 4 to 30 weight percent based on the weight of the silicon carbide powder and the carbon source is present in an amount such that the total of the free carbon obtained from pyrolysis of the organosilicon polymer and the free carbon obtained from the pyrolysis of the carbon source is greater than 0.2 weight percent based on the total weight of the silicon carbide powder, the silicon-carbon char derived from the organosilicon polymer and the carbon char derived from the carbon source; and
(ii) then forming the uniform mixture into the desired shape under pressure at a temperature less than about 500 °C. to obtain a shaped handleable green body; and
(B) sintering the shaped handleable green body in an inert atmosphere, under vacuum or both at a temperature greater than 1900 °C. to obtain a sintered body of silicon carbide with a density greater than 2.4 g/cm$^3$.

**2.** A method as described in claim 1 wherein the free carbon value of the organosilicon polymer and carbon source is determined, prior to forming a handleable green body, by separately heating a known amount of the organosilicon polymer and carbon source under an inert atmosphere to an elevated temperature for a time sufficient to convert the organosilicon polymer into a stable silicon-carbon char and the carbon source into stable carbon char, determining the char yield and elemental content of the silicon carbon char and the carbon char and then calculating the amount of free carbon or free silicon in the silicon-carbon char per part organosilicon polymer and the amount of free carbon in the carbon char per part carbon source and wherein the metal-containing sintering aid is selected from the group consisting of boron, boron-containing compounds, aluminum and aluminum-containing compounds.

**3.** A method as described in claim 2 wherein a curing agent is additionally included in said uniform mixture in an amount effective to cure the organosilicon polymer or the carbon source.

**4.** A method of forming a handleable green body, which method comprises
(A) preparing a uniform mixture comprising silicon carbide powder, a metal-containing sintering aid, an organosilicon polymer which yields a silicon-carbon char upon pyrolysis and a carbon source which yields a carbon char upon pyrolysis, where the metal-containing sintering aid is present at 0.1 to 3.0 weight percent of the metal based on the weight of silicon carbide powder, where the organosilicon polymer is present at a level of 4 to 30 weight percent based on the weight of the silicon carbide powder and the carbon source is present in an amount such that the total of the free carbon obtained from pyrolysis of the organosilicon polymer and the free carbon obtained from the

pyrolysis of the carbon source is greater than 0.2 weight percent based on the total weight of the silicon carbide powder, the silicon-carbon char derived from the organosilicon polymer and the carbon char derived from the carbon source; and

(B) forming the uniform mixture into the desired shape under pressure at a temperature less than about 500 °C.

5. A uniform mixture consisting essentially of silicon carbide powder, a metal-containing sintering aid, an organosilicon polymer which yields a silicon-carbon char upon pyrolysis and a carbon source which yields a carbon char upon pyrolysis, where the metal-containing sintering aid is present at 0.1 to 3.0 weight percent of the metal based on the weight of silicon carbide powder, where the organosilicon polymer is present at a level of 4 to 30 weight percent based on the weight of the silicon carbide powder and the carbon source is present in an amount such that the total of the free carbon obtained from pyrolysis of the organosilicon polymer and the free carbon obtained from the pyrolysis of the carbon source is greater than 0.2 weight percent based on the total weight of the silicon carbide powder, the silicon-carbon char derived from the organosilicon polymer and the carbon char derived from the carbon source.